# EUROPÄISCHE PATENTANMELDUNG

(11) **EP 2 026 129 A1**
(43) Veröffentlichungstag der Anmeldung: **18.02.2009**
(21) Anmeldenummer: 08104937.1
(22) Anmeldetag: 31.07.2008
(51) Int. Cl.: G03B 21/56

(54) **Leinwandanordnung zur Projektion einer dreidimensionalen Illusionswelt**

(30) Priorität: 31.07.2007 DE 102007036391
(71) Anmelder: Zink, Armin, 51491 Overath (DE)
(72) Erfinder: Zink, Armin, 51491 Overath (DE)
(74) Vertreter: Stute, Ivo Peter

(57) **Zusammenfassung**

Eine Leinwandanordnung mit mindestens zwei Wänden zur Projektion einer dreidimensionalen Illusionswelt, einem Rahmen und mindestens einer die Wände bildenden Projektionsleinwand, die eine einfachere Rahmenkonstruktion aufweist und einfach herzustellen und aufzubauen ist, ist dadurch gekennzeichnet, dass mindestens eine der Wände durch mindestens einen Spannrahmen (23) und eine darauf aufgespannte Projektionsleinwand (41) gebildet ist.

## Beschreibung

Die Erfindung betrifft eine Leinwandanordnung mit mindestens zwei Wänden zur Projektion einer dreidimensionalen Illusionswelt und mindestens einer die Wände bildenden Projektionsleinwand.

Räume zur Projektion einer dreidimensionalen Illusionswelt sind unter dem Akronym CAVE, das für Cave Automatic Virtual Environment steht, bekannt. Sie werden verwendet, um eine dreidimensionalen Illusionswelt der virtuellen Realität zu erzeugen.

Eine bekannte Möglichkeit zur Realisierung eines solchen Raums besteht in einer würfelartigen Rahmenkonstruktion, in die eine Projektionsleinwand so eingehängt ist, dass die Projektionsleinwand mehrere Wände (Projektionsflächen) eines Kubus bildet. Die Projektionsflächen werden üblicherweise von außen mit stereoskopische Projektionen so angestrahlt, dass im Inneren des Kubus eine virtuelle Illusionswelt sichtbar wird. Damit eine streifenfreie Projektion einer Illusionswelt im Bereich der Übergänge der Projektionsflächen möglich wird, die nicht durch eine Verschattung durch Rahmenteile gestört ist, sind die die Projektionsflächen bildenden Teile der Projektionsleinwand an Pfosten des Rahmens frei aufgehängt. Hierfür sind an den zwischen zwei Projektionsflächen liegenden Kanten der Projektionsleinwand an ihrer dem Raum abgewandten Seite Laschen angenäht. Durch die Laschen sind dann Stäbe geführt, die von den Pfosten des Rahmens gehalten werden. Auf diese Weise werden die durch die Projektionsleinwand gebildeten Projektionsflächen diagonal über die Pfosten der Rahmenkonstruktion verspannt. Im Ergebnis bestehen die vertikalen Ecken des Projektionsraumes aus Leinwandmaterial, so dass die Wände des Projektionsraums vollständig und durchgängig von außen angestrahlt werden können.

An der Unterseite der Rahmenkonstruktion ist ein Doppelrahmen mit einem inneren und einem äußeren Rahmenteil ausgeführt, wobei der innere Rahmenteil zum Umlenken der eine Projektionsfläche bildenden Projektionsleinwand nach außen benötigt wird, und am äußeren Rahmenteil Mittel zur Verspannung der Projektionsleinwand vorgesehen sind.

Nach oben muss die Projektionsleinwand um einen horizontalen oberen Rahmen herum abgespannt oder in diesen eingehängt werden.

Die Projektionsleinwand selbst besteht üblicherweise aus einem geklebten Material, meist einer semitransparenten Folie, um eine nahtlose Projektion zu gewährleisten.

Solche Projektionsräume sind üblicherweise als offener Kubus mit einer Rückwand-, zwei Seiten- und einer Bodenfläche ausgebildet, seltener weisen sie eine Eingangswandfläche oder eine Deckenfläche auf. Wenn der Boden als Projektionsfläche angestrahlt wird, ist üblicherweise ein begehbarer Glasboden über der Projektionsfläche vorgesehen. Ist eine Eingangswandfläche vorgesehen, ist diese üblicherweise so ausgebildet, dass sie geöffnet werden kann, um den Zugang zum Raum zu ermöglichen.

Die beschriebene Rahmenkonstruktion ist aufwändig und in ihrer Handhabung umständlich. Insbesondere bei Raumgrößen mit einer Kantenlänge von 3m und mehr werden vier oder fünf Personen benötigt, um die Projektionsleinwand in die Rahmenkonstruktion faltenfrei einzuhängen und in ihr zu verspannen, ohne sie zu zerstören.

Auch die Herstellung einer nahtfreien, verschweißten Projektionsleinwand ist aufwändig. Sie weist darüber hinaus den Nachteil auf, dass zwar die vertikalen Raumkanten durchgehend ausgeleuchtet werden können, nicht aber die Boden- bzw. Deckenkanten des Raums, da die Projektionsleinwand dort nicht frei aufgehängt, sondern unmittelbar um den inneren Rahmenteil des unteren Rahmens bzw. um Teile des oberen Rahmens geführt ist.

Die Aufgabe der vorliegenden Erfindung besteht darin, eine Leinwandanordnung der eingangs genannten Art zur Verfügung zu stellen, die eine einfachere Rahmenkonstruktion aufweist und einfacher herzustellen und aufzubauen ist.

Diese Aufgabe wird mit einer Leinwandanordnung mit den Merkmalen des Anspruchs 1 gelöst. Weitere vorteilhafte Ausgestaltungsmerkmale der Erfindung ergeben sich aus den Unteransprüchen.

Ein Kerngedanke der vorliegenden Erfindung besteht darin, nicht eine Projektionsleinwand für eine Vielzahl von Projektionsflächen, sondern je eine Projektionsleinwand für eine Projektionsfläche zu verwenden und diese hierfür auf einen Spannrahmen, ähnlich wie die Leinwand auf einen Bildrahmen, aufzuspannen. Die Spannrahmen können dann beispielsweise in ein Rahmengestell eingesetzt und mit diesem mechanisch verbunden werden, ohne dass ein dreidimensionales Verspannen einer Projektionsleinwand notwendig wäre. Die mechanischen Verbindungselemente können einfach ausgestaltet sein, so dass die Rahmenkonstruktion - wenn eine solche überhaupt benötigt wird - wesentlich einfacher ausgeführt sein kann. Dabei kann bereits mit zwei in einem Winkel zueinander angeordneten Spannrahmen eine räumliche Struktur erzeugt werden.

Wenn der ganze Raum durch zwei oder mehrere aneinander angesetzte, mit Projektionsleinwänden versehene Spannrahmen gebildet wird, die auf einfache Weise, beispielsweise durch eine geeignete Verschraubung, untereinander befestigt werden, ist es sogar möglich, auf eine Rahmenkonstruktion zur Aufnahme der Projektionsflächen gänzlich zu verzichten. Dabei sind die Projektionsleinwände sinnvoller Weise auf der Seite der Spannrahmen, die den anderen Spannrahmen zugewandt ist, also auf der Innenseite des Raums, angeordnet.

Um sicherzustellen, dass die Kanten des Raums vollständig und streifenfrei ausgeleuchtet sind, ist der Bereich mindestens eines von zwei aneinander anliegenden Spannrahmen, in dem die darauf aufgespannten Projektionsleinwände aneinander angrenzen, zumindest teilweise transparent ausgebildet, beispielsweise durch Einsätze aus Plexiglas. Der Lichteinfall kann somit über die Ränder der Projektionsfläche auf der Projektionsleinwand hinaus bis in die Kante des Spannrahmens hinein gehen. Hierdurch wird eine Transmission von Licht bis in die Kontaktstelle der Projektionsleinwände ermöglicht. Im Gegensatz zur eingangs beschriebenen Rahmenkonstruktion ist es bei der erfindungsgemäßen Leinwandanordnung somit möglich, jede der Raumkanten von außen vollständig auszuleuchten.

Vorzugsweise sind die Spannrahmen mehreckig, insbesondere rechteckig und vor allem quadratisch ausgebildet, so dass mit ihnen ein Projektionsraum in Form eines offenen oder geschlossenen Quaders, insbesondere in Form eines Würfels, gebildet werden kann.

Für die erfindungsgemäße Leinwandanordnung geeignete Spannrahmen sind vorzugsweise so ausgebildet, dass die aneinander angrenzenden Seitenflächen benachbarter Spannrahmen um 45° zur jeweiligen Projektionsfläche der Projektionsleinwand geneigt sind. So können sie besonders gut zu einem Raum zusammengesetzt und miteinander mechanisch verbunden bzw. gegebenenfalls auch verklebt werden.

Als besonders geeignete Rahmenprofile für die Spannrahmen haben sich solche mit trapezförmigem Querschnitt erwiesen, wobei die Basis des Trapezes vorzugsweise an der Außenseite des Spannrahmens und ein mit der Basis einen spitzen Winkel von insbesondere 45° oder mehr bildender Schenkel die Spannrahmeninnenseite bildet, und wobei die Projektionsleinwand über die durch die von Basis und Schenkel gebildete Kante gespannt ist. Insbesondere mit solchen Rahmenprofilen kann ein äußerst stabiler Spannrahmen mit dem Körper eines hohlen Pyramidenstumpfs gebildet werden.

Zum Aufspannen der Projektionsleinwand auf einen Spannrahmen sind vorzugsweise an mindestens zwei gegenüberliegenden Rahmenprofilen Mittel zum Verspannen der Projektionsleinwand vorgesehen.

Mit der erfindungsgemäßen Leinwandanordnung ergeben sich eine Vielzahl von Vorteilen gegenüber dem eingangs beschriebenen Stand der Technik. Wie bereits erwähnt, wird der Aufbau des Rahmens als auch das Spannen der Projektionsleinwände durch die Verwendung von einzelnen Spannrahmen für jeweils einzelne Projektionsleinwände wesentlich vereinfacht. Darüber hinaus kann ein ganzer Raum aus weitestgehend gleichen Spannrahmen aufgebaut werden. Die Notwendigkeit des Herstellens einer nahtlosen Leinwand durch Verkleben mehrerer Leinwände miteinander entfällt. In allen Raumkanten kann eine gleichmäßig gute Projektionsqualität sichergestellt werden. Außerdem ist der Aufbau der Spannrahmen vergleichsweise unempfindlich gegenüber Fertigungstoleranzen.

Im Folgenden wird die Erfindung anhand von Figuren, in denen ein erfindungsgemäßes Ausführungsbeispiel gezeigt ist, näher erläutert.

Es zeigen
- Fig.1: einen Teil eines Projektionsraums im Querschnitt;
- Fig.2: aneinander liegende Rahmenprofile zweier Spannrahmen mit dazwischen eingespannten Projektionsleinwänden im Querschnitt; und
- Fig. 3: eine Prinzipskizze einer erfindungsgemäßen Leinwandanordnung in Aufsicht.

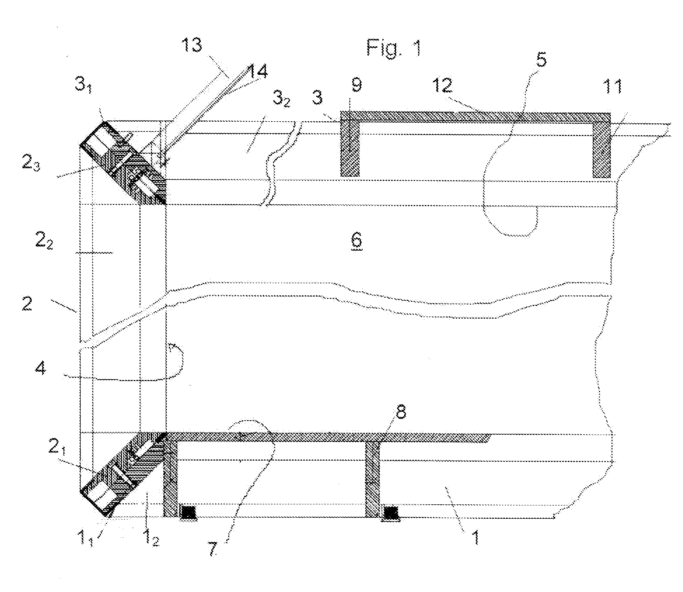

Figur 1 zeigt einen Querschnitt eines Teils einer Leinwandanordnung in Seitenansicht. Die Leinwandanordnung besteht im Wesentlichen aus aneinander anliegenden Rahmen, von denen ein bodenseitiger Rahmen 1, ein eine Seitenwand definierender Spannrahmen 2 und einen eine Decke definierender Spannrahmen 3 dargestellt sind.
Die Rahmen 1, 2, 3 sind alle im Wesentlichen gleich aufgebaut. Sie bestehen jeweils aus vier zu einem Quadrat zusammengesetzten Rahmenprofilen, wobei die Rahmenprofile 1₁, 1₂, 2₁, 2₂, 2₃, 3₁, 3₂ eines Spannrahmens jeweils im Wesentlichen identisch sind. Die Rahmen weisen einen trapezförmigen Querschnitt auf, wobei ihre parallelen Außenseiten um 45° nach innen geneigt sind, so dass jeder Rahmen das Profil eines hohlen Pyramidenstumpfes hat. Die Spannrahmen liegen mit ihren um 45° geneigten Außenseiten aneinander.

Auf die die Seiten und die Decke definierenden Spannrahmen 2 und 3 sind Projektionsleinwände 4, 5 und 6 gespannt, wobei in der dargestellten Ansicht die Projektionsleinwände senkrecht zur Papierebene verlaufen und der die Projektionsleinwand 6 haltende Spannrahmen durch die Rahmen 2, 3 und 4 verdeckt ist. Auf die deckenseitige Projektionsleinwand kann insbesondere dann verzichtet werden, wenn der Boden durch einen oben außerhalb des durch die Projektionsleinwände gebildeten Raums angeordneten Projektor ausgeleuchtet werden soll.

Der bodenseitige Rahmen 1 ist nicht als Spannrahmen ausgebildet. Vielmehr fasst er eine Bodenplatte 7 ein, die über zusätzliche, vom Rahmen eingefasste Streben 8 zusätzlich abgestützt ist.

Der deckenseitige Spannrahmen fasst Träger 9, 11 ein, auf die ein Brett 12 zum Abstellen von technischen Geräten, beispielsweise von Projektionsgeräten dient. Des weiteren ist am Rahmenprofil 3₁ ein im Winkel von 45° nach oben ragender Träger 13 für einen Spiegel 14 befestigt.

Mit dieser Leinwandanordnung kann insbesondere ein nach einer oder zwei Seiten hin offener, aber auch ein geschlossener Raum in Form eines Quaders oder eines Würfels aufgebaut werden.

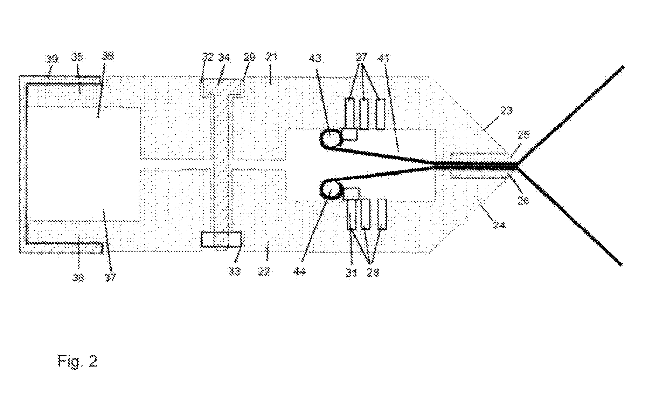

In Figur 2 sind zwei aneinander anliegende Rahmenprofile 21, 22 zweier Spannrahmen im Querschnitt dargestellt. Beide Rahmenprofile 21, 22 haben einen trapezförmigen Querschnitt und liegen mit ihren jeweils die Basis des Trapezes bildenden Seiten aneinander an. Die der Innenseite der Spannrahmen zugewandten Schenkel der Trapeze bilden mit der Basis jeweils einen Winkel von 45° und gemeinsam einen Winkel von 90°. In die inneren Kanten der Rahmenprofile 21, 22 ist entlang jedes der Rahmenprofile 21, 22 ein transparentes Material, vorzugsweise Plexiglas 25, 26 eingelassen.

In einem der Innenseite der Spannrahmen 21, 22 zugewandten Bereich weisen die Rahmenprofile an ihren aneinander anliegenden Seiten jeweils eine Ausnehmung mit rechteckigem Querschnitt auf, in die zueinander beabstandet sogenannte Rampamuffen 27, 28 eingesetzt sind. Die Rampamuffen nehmen Schraubbolzen 29, 31 auf. Des weiteren sind in den Rahmenprofilen 21, 22 miteinander fluchtende Durchgangsbohrungen 32, 33 vorgesehen, so dass sie mit Schraubbolzen 34 miteinander verschraubt werden können. Die außen liegenden, die jeweils zweiten Schenkel der Trapeze bildenden Außenseiten 35, 36 der Rahmenprofile 21, 22 verlaufen jeweils senkrecht zur Trapezbasis, wobei an diesen Außenseiten sich längs des Rahmenprofils erstreckende Ausnehmungen 37, 38 vorgesehen sind, die gemeinsam beispielsweise als Kabelkanal genutzt werden können. Die äußeren Enden der aneinander anliegende Rahmenprofile 21, 22 können durch eine Kappe oder Klammer 39 abgedeckt bzw. eingefasst sein.

Zwischen den beiden Rahmenprofilen sind zwei Projektionsleinwände 41, 42 eingespannt. An ihren Kanten sind Laschen ausgebildet, in denen Streben 43, 44 eingesetzt sind, die sich über die gesamte Breite der Projektionsleinwand erstrecken. Die Streben 43, 44 greifen jeweils hinter die Schraubbolzen 29, 31. Dabei werden die Streben 43, 44 aufgrund der Spannung der Projektionsleinwand 41, 42 hinter den Schraubenköpfen der Schraubbolzen 29, 31 gehalten. Wie unschwer zu erkennen ist, kann jede der Projektionsleinwände durch Versetzen der Schraubbolzen 29, 31 in vordere oder hintere Rampamuffen 27, 28 unterschiedlich stark verspannt werden. Auch ist deutlich zu erkennen, dass das in die innere Kanten der Rahmenprofile 21, 22 eingesetzte Material die Projektionsfläche der Projektionsleinwände begrenzt, wobei aber die Kanten der Projektionsflächen durch eine rückwärtige Projektion auf die Projektionsflächen vollständig ausgeleuchtet werden können.

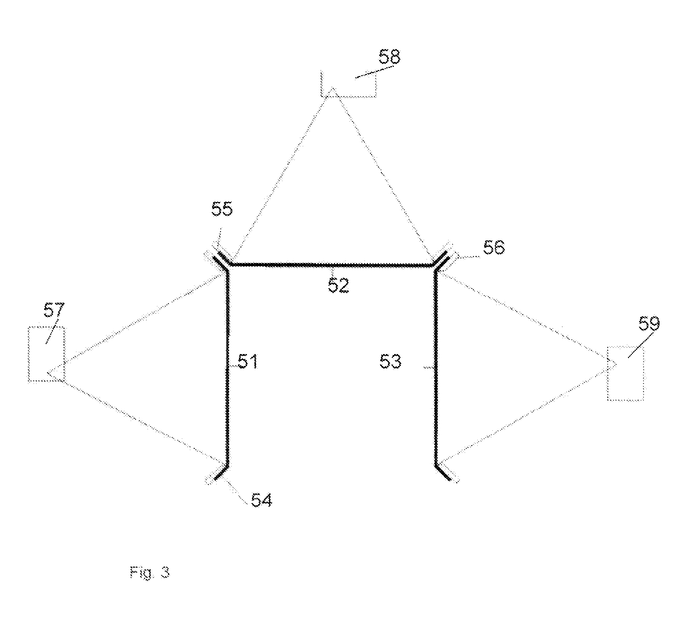

Aus der in Figur 3 abgebildeten Prinzipskizze ist die Leinwandführung einer Leinwandanordnung mit drei Seitenwänden gut erkennbar. Die Projektionsleinwände 51, 52, 53 sind auf jeweils rechtwinklig zueinander stehenden Spannrahmen 54, 55, 56 aufgespannt. Die Projektionsleinwände 51, 52, 53 werden von hinten mit Projektoren 57, 58, 59 ausgeleuchtet.

## Patentansprüche

1. Leinwandanordnung mit mindestens zwei Wänden zur Projektion einer dreidimensionalen Illusionswelt und mindestens einer die Wände bildenden Projektionsleinwand, **dadurch gekennzeichnet, dass** mindestens eine der Wände durch mindestens einen Spannrahmen und eine darauf aufgespannte Projektionsleinwand gebildet ist.

2. Leinwandanordnung nach einem der Ansprüche 1, **gekennzeichnet durch** mindestens zwei aneinander angrenzende Spannrahmen.

3. Leinwandanordnung nach Anspruch 2, **dadurch gekennzeichnet, dass** die auf einen Spannrahmen aufgespannten Projektionsleinwände auf der Seite des Spannrahmens, die den anderen Spannrahmen zugewandt ist, angeordnet ist.

4. Leinwandanordnung nach Anspruch 2 oder 3, **dadurch gekennzeichnet, dass** der Bereich mindestens eines von zwei aneinander anliegenden Spannrahmen, in dem die darauf aufgespannten Projektionsleinwände aneinander angrenzen, zumindest teilweise transparent ausgebildet ist.

5. Leinwandanordnung nach einem der Ansprüche 1 bis 4, **gekennzeichnet durch** mehreckige, insbesondere rechteckige Spannrahmen.

6. Leinwandanordnung nach Anspruch 5, **gekennzeichnet durch** quadratische Spannrahmen.

7. Leinwandanordnung nach Anspruch 5 oder 6, **dadurch gekennzeichnet, dass** mindestens drei Projektionsleinwände die Außenflächen eines Quaders, insbesondere eines Würfels, bilden.

8. Leinwandanordnung nach Anspruch 2 oder einem der darauf rückbezogenen Ansprüche 3 bis 7, **dadurch gekennzeichnet, dass** die aneinander angrenzenden Seitenflächen benachbarter Spannrahmen um 45° zur jeweiligen Projektionsfläche der Projektionsleinwand geneigt sind.

9. Leinwandanordnung nach einem der Ansprüche 1 bis 8, **gekennzeichnet durch** einen Spannrahmen aus Rahmenprofilen mit trapezförmigem Querschnitt.

10. Leinwandanordnung nach einem der Ansprüche 1 bis 9, **dadurch gekennzeichnet, dass** die Spannrahmen den Körper eines hohlen Pyramidenstumpfs bilden.

11. Leinwandanordnung nach einem der Ansprüche 1 bis 10, dass an mindestens zwei gegenüberliegenden Rahmenprofilen eines Spannrahmens Mittel zum Verspannen der Projektionsleinwand vorgesehen sind.
